# EUROPEAN PATENT APPLICATION

(11) **EP 4 803 993 A1**
(43) Date of publication of application: **09.09.2026**
(21) Application number: 24905849.6
(22) Date of filing: 29.10.2024
(51) Int. Cl.: G06F 3/04817, G06F 3/04847, G06F 3/01

(54) **APPLICATION INTERFACE DISPLAY METHOD AND APPARATUS, SMART WEARABLE DEVICE, AND STORAGE MEDIUM**

(30) Priority: 18.12.2023 CN 202311749425
(71) Applicant: Meta-Bounds Inc., Zhuhai, Guangdong 519000 (CN)
(72) Inventor: HUANG, Yi Ran, Zhuhai, Guangdong 519000 (CN)
(74) Representative: Knöner, Gregor
(86) International application number: PCT/CN2024/128248
(87) International publication number: WO 2025/130361

(57) **Abstract**

Provided is a method for displaying an application interface. The method includes: when a smart wearable device is in a worn state, the smart wearable device is controlled to display a preset application interface (S101); and an interface adjustment instruction is received, and the application interface is switched from a first state to a second state according to the interface adjustment instruction (S102). Flexibility and efficiency of application interface adjustment of the smart wearable device are improved.

## Description

The present disclosure claims the priority to Chinese Patent Application No. 2023117494258, filed with the China National Intellectual Property Administration on December 18, 2023 and entitled "Method and apparatus for displaying application interface, smart wearable device, and storage medium", which is incorporated in its entirety herein by reference.

### Technical Field

The present disclosure relates to the field of display technologies, and particularly relates to a method and apparatus for displaying an application interface, a smart wearable device, and a storage medium.

### Background

With continuous technological advancement and growing market demands, smart wearable devices such as Augmented Reality (AR) glasses and Virtual Reality (VR) glasses have become one of the current research hotspots. For instance, AR glasses allow a user to view a virtual image overlaid on the real world, boasting broad application prospects and market potential.

In related technologies, when the AR glasses display an application list interface, the user needs to tap an icon to expand or retract the application list interface. This process requires the user to tap the corresponding icon accurately, imposing strict precision requirements on user operations. However, when the user is in a moving state, such as walking, cycling, or riding in a vehicle, the user tends to experience hand tremors while operating the application list interface, making it difficult to select an interactive object (for instance, the icon corresponding to the application list) corresponding to the application list interface. Thus, the user cannot use the AR glasses properly while moving, which degrades user experience.

### Summary

A main objective of examples of the present disclosure is to provide a method and apparatus for displaying an application interface, a smart wearable device, and a storage medium, so as to solve problems in the related art that when a smart wearable device displays an application list interface, a user needs to accurately tap a corresponding icon, imposing strict precision requirements on user operations, and the user cannot use the application list interface properly while moving.

In a first aspect, an example of the present disclosure provides a method for displaying an application interface. The method includes the following steps:
when the smart wearable device is in a worn state, the smart wearable device is controlled to display a preset application interface; and
an interface adjustment instruction is received, and the application interface is switched from a first state to a second state according to the interface adjustment instruction.

In a second aspect, an example of the present disclosure provides an apparatus for displaying an application interface. The apparatus includes:
an interface display module, configured to control, when the smart wearable device is in a worn state, the smart wearable device to display a preset application interface; and
an interface adjustment module, configured to receive an interface adjustment instruction, and switch the application interface from a first state to a second state according to the interface adjustment instruction.

In a third aspect, an example of the present disclosure further provides a smart wearable device. The smart wearable device includes a processor, a memory, a computer program stored in the memory and executable by the processor, and a data bus configured to implement connection and communication between the processor and the memory. When the computer program is executed by the processor, the following steps are implemented:
when the smart wearable device is in a worn state, the smart wearable device is controlled to display a preset application interface; and
an interface adjustment instruction is received, and the application interface is switched from a first state to a second state according to the interface adjustment instruction.

In a fourth aspect, an example of the present disclosure further provides a computer-readable storage medium. The computer-readable storage medium stores a computer program. When the computer program is executed by a processor, the processor is caused to implement the following steps:
when the smart wearable device is in a worn state, the smart wearable device is controlled to display a preset application interface; and
an interface adjustment instruction is received, and the application interface is switched from a first state to a second state according to the interface adjustment instruction.

The examples of the present disclosure provide the method and apparatus for displaying an application interface, the smart wearable device, and the storage medium. The method includes the following steps: when the smart wearable device is in the worn state, the smart wearable device is controlled to display the preset application interface; and the interface adjustment instruction is received, and the application interface is switched from the first state to the second state according to the interface adjustment instruction. The interface adjustment instruction is generated by performing a corresponding trigger operation by an external object on the smart wearable device or a controller communicatively connected to the smart wearable device. In the present disclosure, the corresponding interface adjustment instruction is obtained by performing the trigger operation on the smart wearable device or the controller communicatively connected to the smart wearable device. The trigger operation may be a tap operation or a sliding operation. For instance, the sliding operation may be sliding at a corresponding position of the smart wearable device. Compared with an accurate tap operation, this reduces difficulty for a user to operate the application interface of the smart operation device while moving, such that the user can properly operate the application interface corresponding to the smart wearable device while moving. In this way, a display state of the application interface may be accurately and quickly adjusted according to the interface adjustment instruction. Thus, problems in the related art that when a smart wearable device displays an application list interface, a user needs to accurately tap a corresponding icon, imposing strict precision requirements on user operations, and the user cannot use the application list interface properly while moving are solved. Flexibility and efficiency of application interface adjustment of the smart wearable device are improved, such that the user can conveniently use the smart wearable device, and user satisfaction is improved.

### Brief Description of the Drawings

In order to more clearly illustrate technical solutions of examples of the present disclosure, drawings required for description of the examples will be described briefly below. Obviously, the drawings in the following description are merely some examples of the present disclosure. Those of ordinary skill in the art can also obtain other drawings from these drawings without creative efforts.
Fig. 1 is a schematic flowchart of a method for displaying an application interface according to an example of the present disclosure;
Fig. 2 is a schematic diagram of a display effect of an application interface according to an example of the present disclosure;
Fig. 3 is a schematic diagram of a display effect of a preset application interface according to an example of the present disclosure;
Fig. 4 is a schematic diagram of a controller according to an example of the present disclosure;
Fig. 5 is a schematic diagram of a scene of a quick instruction area in a method for displaying an application interface according to an example of the present disclosure;
Fig. 6 is a schematic diagram of another scene of a quick instruction area in a method for displaying an application interface according to an example of the present disclosure;
Fig. 7 is a schematic diagram of first interface elements and second interface elements in a method for displaying an application interface according to an example of the present disclosure;
Fig. 8 is a schematic structural diagram of modules of an apparatus for displaying an application interface according to an example of the present disclosure; and
Fig. 9 is a schematic structural block diagram of a smart wearable device according to an example of the present disclosure.

### Detailed Description of the Embodiments

Technical solutions of examples of the present disclosure will be clearly and completely described below in conjunction with accompanying drawings of the examples of the present disclosure. Obviously, the examples described are some examples rather than all examples of the present disclosure. Based on the examples of the present disclosure, all other examples obtained by those of ordinary skill in the art without making creative efforts fall within the protection scope of the present disclosure.

A flowchart shown in the accompanying drawings is only illustrative, and is not intended to include all contents and operations/steps and not intended to be executed in the described order. For instance, some operations/steps may be decomposed, combined, or partially merged, so an actual execution order may change according to an actual situation.

It should be understood that the terms used in the description of the present disclosure are merely for the purpose of describing specific examples and are not intended to limit the present disclosure. As used in the description and the appended claims of the present disclosure, the singular forms "a", "an", "one" and "the" are intended to include plural forms as well, unless otherwise explicitly indicted in the context.

The examples of the present disclosure provide a method and apparatus for displaying an application interface, a smart wearable device, and a storage medium. The method for displaying an application interface may be applied to the smart wearable device. The smart wearable device may be a smart device, such as augmented reality (AR) glasses, extended reality (XR) glasses, or a wearable device.

Some examples of the present disclosure will be described in detail below with reference to the accompanying drawings. The following examples and features in the examples may be combined with each other without conflict.

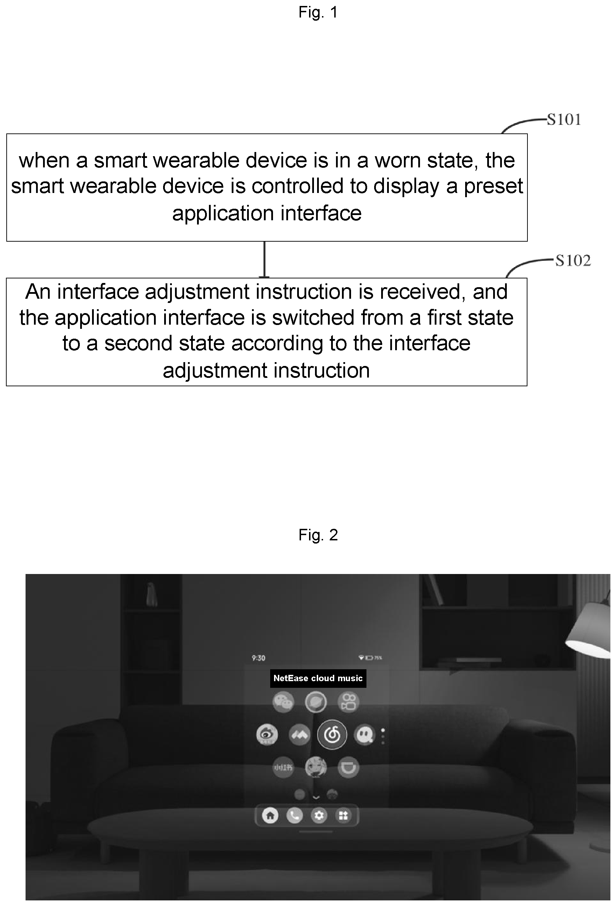

With reference to Fig. 1, Fig. 1 is a schematic flowchart of a method for displaying an application interface according to an example of the present disclosure.

As shown in Fig. 1, the method for displaying an application interface includes the following steps S101 and S102.

S101, when the smart wearable device is in a worn state, the smart wearable device is controlled to display a preset application interface.

For instance, after a user wears the smart wearable device, the smart wearable device may be in the worn state, and the preset application interface corresponding to the smart wearable device may be displayed at a front position of the smart wearable device. The application interface may fully or partially display application icons corresponding to applications configured by the user on the smart wearable device or application identifier icons corresponding to built-in applications of the smart wearable device. Or, the application interface may fully or partially display program interfaces corresponding to applications. In an example, the preset application interface may be a main interface of the smart wearable device. The main interface is a default interface displayed after the smart wearable device is powered on.

In some embodiments, a display position of the preset application interface may be the front position, an upper left position, or another position of the smart wearable device. The present disclosure does not specifically limit the display position corresponding to the preset application interface, and the user may select the display position according to actual needs.

In some embodiments, the present disclosure does not specifically limit a content displayed on the preset application interface, and the user may select the content according to actual needs.

For instance, the preset application interface is configured to display application icons corresponding to applications configured in the smart wearable device. If the smart wearable device is AR glasses, when the user wears the AR glasses, the AR glasses may display application icons corresponding to applications configured in the smart wearable device.

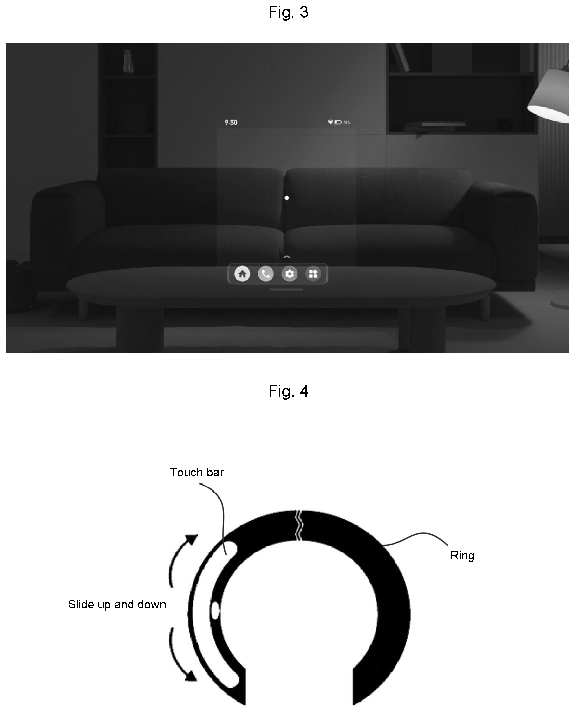

For instance, if the smart wearable device is the AR glasses, after the user wears the AR glasses, direct displaying of an entire application interface corresponding to the AR glasses may block a field of view of the user during use of the AR glasses, as shown in Fig. 2. Thus, when the user just wears the AR glasses, the preset application interface has an interface effect of partially displaying the application interface, as shown in Fig. 3. Thus, when the user just wears the AR glasses, the application interface has a display effect in a partial display state, such that the user does not need to worry about the situation that an interface layout of the preset application interface may block the field of view of the user during use of the AR glasses and affect user experience when the user just wears the AR glasses.

S102, an interface adjustment instruction is received, and the application interface is switched from a first state to a second state according to the interface adjustment instruction.

For instance, an interface adjustment button corresponding to the application interface is arranged on the smart wearable device, or an interface adjustment button corresponding to the application interface is arranged on a controller communicatively connected to the smart wearable device. When an external object presses the interface adjustment button on the smart wearable device or the interface adjustment button on the controller communicatively connected to the smart wearable device, the smart wearable device may receive the interface adjustment instruction.

In some embodiments, the external object may be the user or a pressing apparatus held by the user. The present disclosure does not specifically limit the external object, and the external object may be defined according to actual needs.

In some embodiments, the controller may be a mobile phone of the user or an electronic wristband, is not specifically limited by the present disclosure, and may be selected by the user according to actual needs. The smart wearable device may be in communication with the controller through wireless communication, such as Bluetooth and wifi. A specific communication mode is not specifically limited in the present disclosure and may be selected according to actual needs.

For instance, display states corresponding to the application interface include a partial interface content display state and a full interface content display state. One of the first state and the second state is any one of the partial interface content display state and the full interface content display state. The first state is different from the second state.

For instance, when the first state is the partial interface content display state, the second state is the full interface content display state. That is, the number of interface elements displayed in the first state is less than the number of interface elements displayed in the second state. The interface elements include application icons displayed on the application interface, received information, and opened pages. When the first state is the full interface content display state, the second state is the partial interface content display state. That is, the number of interface elements displayed in the first state is greater than the number of interface elements displayed in the second state.

For instance, the first state is the full interface content display state, and the second state is the partial interface content display state. When a state of the application interface corresponding to the smart wearable device is the first state, if the interface adjustment instruction is received, the state of the application interface of the smart wearable device is switched from the first state to the second state. When a state of the application interface corresponding to the smart wearable device is the second state, if the interface adjustment instruction is received, the state of the application interface of the smart wearable device is switched from the second state to the first state.

In some embodiments, the trigger operation includes a sliding operation. The step that the interface adjustment instruction is received includes the following steps: the sliding operation received by the smart wearable device is detected, and a corresponding sliding trajectory is obtained according to the sliding operation; and the interface adjustment instruction corresponding to the smart wearable device is determined according to the sliding trajectory; or, the sliding operation received by a controller communicatively connected to the smart wearable device is detected, and a corresponding sliding trajectory is obtained according to the sliding operation; and the interface adjustment instruction corresponding to the smart wearable device is determined according to the sliding trajectory.

For instance, a touch bar is arranged at a preset position corresponding to the smart wearable device. In this case, the external object performs the sliding operation on the touch bar, a sliding curve corresponding to the sliding operation is obtained, and then data fitting is performed on the sliding curve, so as to obtain the sliding trajectory corresponding to the sliding operation. Or, a touch bar is arranged on the controller communicatively connected to the smart wearable device. In this case, the external object performs the sliding operation on the touch bar, and then the smart wearable device obtains the sliding trajectory corresponding to the sliding operation.

For instance, a curve slope of the sliding trajectory is calculated, such that a sliding direction corresponding to the sliding operation is determined according to a slope calculation result. For instance, the sliding direction includes upward sliding and downward sliding. As at least one alternative embodiment, when the sliding direction is upward sliding, it indicates that the application interface of the smart wearable device needs to be displayed; and when the sliding direction is downward sliding, it indicates that the application interface of the smart wearable device needs to be hidden. Further, a target display state of the application interface corresponding to the smart wearable device is determined according to the sliding direction, and the interface adjustment instruction corresponding to the smart wearable device is determined according to the target display state.

For instance, if the smart wearable device is AR glasses, a touch bar is arranged on a temple of the AR glasses. A position of the touch bar closer to an ear is regarded as a starting position, and a position of the touch bar farther from the ear is regarded as an ending position. A sliding direction of a sliding trajectory from the starting position to the ending position is upward sliding, and a sliding direction of the sliding trajectory from the ending position to the starting position is downward sliding.

Or, if the smart wearable device is AR glasses and the controller is a ring, a touch bar is arranged on the ring, as shown in Fig. 4. The user wears the ring and performs the sliding operation on the touch bar of the ring. A reference position is set on the ring. When the sliding trajectory corresponding to the sliding operation is away from the reference position, the corresponding sliding direction is upward sliding. When the sliding trajectory corresponding to the sliding operation is toward the reference position, the corresponding sliding direction is downward sliding.

In some embodiments, the sliding direction may be upward sliding, downward sliding, leftward sliding, or rightward sliding, is not specifically limited in the present disclosure, and may be set by the user according to actual needs.

In some embodiments, a meaning of the sliding direction for partial display or full display of the application interface of the smart wearable device is not specifically limited in the present disclosure and may be set by the user according to actual needs.

In addition, in a process of determining the interface adjustment instruction corresponding to the smart wearable device according to the target display state, a current display state of the application interface corresponding to the smart wearable device may further be obtained, and then the interface adjustment instruction corresponding to the smart wearable device may be determined according to the current display state and the target display state. The current display state indicates that the application interface is in the first state or that the application interface is in the second state.

For instance, the first state is the partial interface content display state, and the second state is the full interface content display state. In this case, when the sliding direction is upward sliding, it indicates that the application interface of the smart wearable device needs to be fully displayed, and the target display state is the second state. If the current display state is the first state, the interface adjustment instruction is an instruction configured to fully display the application interface corresponding to the smart wearable device. If the current display state is the second state, the interface adjustment instruction is an instruction configured to ignore the instruction without performing interface adjustment.

For instance, the first state is the partial interface content display state, and the second state is the full interface content display state. In this case, when the sliding direction is downward sliding, it indicates that the application interface of the smart wearable device needs to be partially displayed, and the target display state is the first state. If the current display state is the first state, the interface adjustment instruction is an instruction configured to ignore the instruction without performing interface adjustment. If the current display state is the second state, the interface adjustment instruction is an instruction configured to partially display the application interface corresponding to the smart wearable device.

As at least one alternative embodiment, the sliding operation corresponding to the smart wearable device or the controller communicatively connected to the smart wearable device is detected, such that the corresponding sliding trajectory is obtained. Then, the interface adjustment instruction corresponding to the smart wearable device is determined according to the sliding trajectory, such that operational difficulty for the user to display the application interface is reduced, user demands are quickly responded to, and user satisfaction is improved.

In some embodiments, the smart wearable device and/or a controller communicatively connected to the smart wearable device is provided with quick instruction areas. Each of the quick instruction areas corresponds to one interface adjustment instruction. The trigger operation further includes a tap operation. The step that the interface adjustment instruction is received includes the following steps: a tap position corresponding to the tap operation is detected; the quick instruction area triggered by the tap operation is determined according to the tap position; and the corresponding interface adjustment instruction is generated according to the quick instruction area triggered by the tap operation.

For instance, the quick instruction area is configured on the application interface corresponding to the smart wearable device, or the quick instruction area is configured on the controller communicatively connected to the smart wearable device. After the corresponding tap operation performed by the external object on the smart wearable device is received, the tap position corresponding to the tap operation is detected. When the tap position is within an area where the quick instruction area is located, the quick instruction area is determined as the quick instruction area triggered by the tap operation, and then the interface adjustment instruction corresponding to the triggered quick instruction area is obtained.

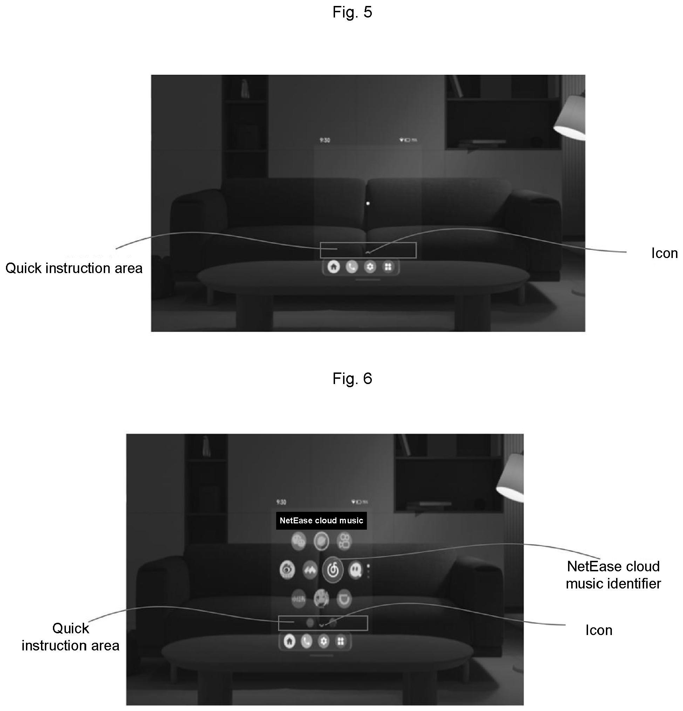

For instance, as shown in Fig. 5, the quick instruction area is configured on the application interface corresponding to the smart wearable device. When an icon in the quick instruction area is upward, it indicates that after the quick instruction area is tapped, the application interface corresponding to the smart wearable device may be fully displayed. That is, the interface adjustment instruction corresponding to the quick instruction area is an instruction for adjusting the application interface corresponding to the smart wearable device from the partial interface content display state to the full interface content display state.

Or, as shown in Fig. 6, the quick instruction area is configured on the application interface corresponding to the smart wearable device. When an icon in the quick instruction area is downward, it indicates that after the quick instruction area is tapped, the application interface corresponding to the smart wearable device may be partially displayed. That is, the interface adjustment instruction corresponding to the quick instruction area is an instruction for adjusting the application interface corresponding to the smart wearable device from the full interface content display state to the partial interface content display state.

It may be understood that a mode of triggering the interface adjustment instruction is not limited to the above modes. For instance, the interface adjustment instruction may be triggered by a double-tap operation, a specific gesture, or other operations.

As at least one alternative embodiment, through the mode of controlling the display state of the application icons corresponding to the application interface provided by the present disclosure, the tap operation from direct tapping of the icons is extended to tapping of the quick instruction area, such that a tapping range is expanded. In this way, the user can accurately tap the quick instruction area even in a moving state, making user operations more convenient, efficient, and rapid.

In some embodiments, the application interface includes a first display area and a second display area. The application interface includes at least one second display area. The step that the application interface is switched from the first state to the second state according to the interface adjustment instruction includes the following steps: the first display area is switched from the first state to the second state according to the interface adjustment instruction, and a display state corresponding to the second display area is at least controlled to remain unchanged.

For instance, the application interface includes the first display area and the second display area. The first display area is configured to display an interface content that may be fully or partially displayed through the interface adjustment instruction. The second display area is configured to persistently display user-defined common or user-defined content of interest. In an example, the application interface includes three display areas, namely one first display area and two second display areas. The first display area is configured at a middle position, and the two second display areas are configured at left and right sides of the first display area, respectively. In another example, the second display area may be defined to display an interface of an application associated with the first display area. For instance, after a certain application (APP) in the first display area is started to run, a running interface of the APP may be displayed in the second display area.

For instance, after the smart wearable device receives the interface adjustment instruction, the first display area is switched from the first state to the second state according to the interface adjustment instruction. The second display area is persistently displayed on the application interface. When the smart wearable device receives the interface adjustment instruction, a display state corresponding to the second display area remains unchanged regardless of whether an adjustment objective corresponding to the interface adjustment instruction is to fully display or partially display the interface content.

In some embodiments, the application interface may include one second display area or two second display areas. When the two second display areas are included, display positions of the two second display areas in the application interface may be at left and right sides of the first display area, or both at a left side of the first display area. The display positions are not specifically limited in the present disclosure, and may be set by the user according to actual needs.

For instance, the second display area is configured at a right side of the application interface. In the second display area, the user can quickly view concerned contents, such as a stock APP, a NetEase cloud music APP, or other components. Display of the second display area is not affected when the smart wearable device receives the interface adjustment instruction. Similarly, one second display area may be configured at the left side of the application interface to display some common components, such as a short message component. In addition, the user may remove the second display areas at the left and right sides of the application interface in a corresponding setting function of the smart wearable device.

As at least one alternative embodiment, in the present disclosure, the second display area is configured in the application interface to persistently display the user-defined common or user-defined content of interest, such that the user can conveniently and quickly use the user-defined common components or user-defined content of interest, thus saving searching time of the user and improving efficiency.

In some embodiments, the method further includes the following step: when the application interface of the smart wearable device is in a target state, if it is detected that an application identifier corresponding to the application interface is in a selected state, the application identifier is highlighted. A mode for the highlighting includes at least one of a size change of the application identifier and a color change of the application identifier.

For instance, the first state may be the full interface content display state or the partial interface content display state. When the first state is the full interface content display state, the second state is the partial interface content display state. When the first state is the partial interface content display state, the second state is the full interface content display state. If the target state is that the application interface is in the full interface content display state, the target state may be the first state or the second state.

For instance, when the first state is the full interface content display state, the target state is the first state. When the application interface of the smart wearable device is in the first state, if it is detected that the application identifier corresponding to the application interface is in the selected state, the application identifier is highlighted. The mode for the highlighting may be the size change of the application identifier, the color change of the application identifier, or simultaneous size and color changes of the application identifier.

For instance, as shown in Fig. 6, when the first state is the full interface content display state and the application interface of the smart wearable device is in the first state, if it is detected that a NetEase cloud music identifier is in a selected state, the NetEase cloud music identifier is significantly larger than surrounding identifiers for highlighting. In addition, a bright-colored border is displayed around the NetEase cloud music identifier, to cause the NetEase cloud music identifier to be more conspicuous than the surrounding identifiers, so as to remind the user of the NetEase cloud music identifier.

As at least one alternative embodiment, after it is detected that the corresponding application identifier in the application interface is in the selected state and the application identifier is highlighted, the user can more clearly perceive a currently selected object. In this way, clutter on the interface is reduced, operation efficiency of the user is improved, and the objective of reminding the user is quickly achieved.

In some embodiments, the application interface at least includes the first display area and the second display area. The method further includes the following steps: a first area corresponding to the first display area and a second area corresponding to the second display area within a field of view range corresponding to the smart wearable device are at least obtained; and at least the first area and the second area are compared to obtain a maximum area, and a display area corresponding to the maximum area is determined as a target interaction area. The target interaction area is an area in which the smart wearable device performs interface operations.

For instance, after the user wears the smart wearable device, the application interface corresponding to the smart wearable device may be presented directly in front of the smart wearable device. When the user turns, the smart wearable device is caused to turn accordingly. A presentation position of the application interface remains unchanged. However, the user may merely view the application interface through the smart wearable device within the field of view range corresponding to the smart wearable device. If the application interface exceeds the field of view range, the user cannot see the application interface through the smart wearable device.

For instance, when the application interface includes at least the first display area and the second display area, the first area corresponding to the first display area and the second area corresponding to the second display area within the field of view range corresponding to the smart wearable device are at least obtained. The first area is a product of a length and a width corresponding to the first display area, and the second area is a product of a length and a width corresponding to the second display area.

For instance, when the application interface includes a first display area A and two second display areas B and C, a first area S1 corresponding to the first display area A, a second area S2 corresponding to the second display area B, and a third area S3 corresponding to the second display area C within the field of view range corresponding to the smart wearable device are obtained.

For instance, the first area and the second area are at least compared to obtain a maximum area, and a display area corresponding to the maximum area is determined as the target interaction area. The target interaction area is an area in which the smart wearable device performs interface operations.

For instance, when the application interface includes the first display area and the second display area, the first area corresponding to the first display area and the second area corresponding to the second display area are obtained. When the first area is greater than or equal to the second area, the first display area is determined as the target interaction area corresponding to the smart wearable device. When the first area is less than the second area, the second display area is determined as the target interaction area corresponding to the smart wearable device. The target interaction area is an area in which the smart wearable device performs icon operations. That is, the target interaction area is a currently selected working area of the smart wearable device. If the user performs a use operation on the application interface, the use operation may act on the application identifier corresponding to the target interaction area. For instance, if the use operation is a switching operation of the application identifier, the switching operation may be performed on the application identifier corresponding to the target interaction area.

For instance, when the target interaction area is the second display area and the user selects a certain APP in the second display area, the APP may be highlighted. A highlighting mode may be enlarging the APP or changing a color of the APP. A specific change mode of the APP after selection is not specifically limited in the present disclosure and may be set by the user according to actual needs.

As at least one alternative embodiment, the present disclosure determines the target interaction area corresponding to the smart wearable device according to the first area corresponding to the first display area and the second area corresponding to the second display area within the field of view range corresponding to the smart wearable device, such that the user can locate a needing icon more quickly, operation steps are reduced, and usage efficiency is improved.

In some embodiments, the smart wearable device is configured with a first working mode and a second working mode. The first working mode is to cause a presentation area corresponding to the application interface to be a fixed area. The second working mode is to cause the presentation area corresponding to the application interface to change in accordance with turning of the smart wearable device. The method further includes the following steps: when the smart wearable device is in the first working mode, whether the application interface is within a field of view range corresponding to the smart wearable device is detected; if it is detected that the application interface is outside the field of view range, corresponding first duration information when the application interface is outside the field of view range is obtained; and when the first duration information is greater than first preset duration, the first working mode corresponding to the smart wearable device is switched to the second working mode.

For instance, the smart wearable device is configured with the first working mode and the second working mode. The first working mode is to cause the presentation area corresponding to the application interface to be the fixed area. That is, after the user wears the smart wearable device, the application interface may be displayed directly in front of the smart wearable device, and the display area is set as the fixed area of the application interface. When the user turns and the smart wearable device is caused to turn accordingly, a position directly in front of the smart wearable device changes, and the application interface is still displayed in the fixed area. The display position of the application interface does not change in accordance with turning of the smart wearable device. The second working mode is to cause the presentation area corresponding to the application interface to change in accordance with turning of the smart wearable device. That is, after the user wears the smart wearable device, the application interface may be displayed directly in front of the smart wearable device. Assuming that a current position, where the application interface is displayed, directly in front of the smart wearable device is set as a first position, when the user turns and the smart wearable device is caused to turn, the position directly in front of the smart wearable device changes. That is, the position directly in front of the smart wearable device changes from the first position to a second position. In this case, the application interface needs to be switched from the first position to the second position so as to be presented. In this way, in the second working mode, the display position of the application interface of the smart wearable device changes in accordance with turning of the smart wearable device.

For instance, when the smart wearable device is in the first working mode, that is, when the application interface corresponding to the smart wearable device is displayed in the fixed area, whether the application interface is within the field of view range corresponding to the smart wearable device is detected. If it is detected that the application interface is outside the field of view range corresponding to the smart wearable device, the first duration information when the application interface is outside the field of view range is obtained. When the first duration information is greater than the first preset duration, the first working mode corresponding to the smart wearable device is switched to the second working mode. When the first duration information is less than or equal to the first preset duration, the first working mode corresponding to the smart wearable device remains unchanged.

In some embodiments, the first preset duration may be selected according to actual needs, and is not specifically limited in the present disclosure.

As at least one alternative embodiment, in the present disclosure, when the smart wearable device is in the first working mode, whether the application interface is within the field of view range corresponding to the smart wearable device is detected. When the application interface is outside the field of view range in the first preset duration, the first working mode corresponding to the smart wearable device is switched to the second working mode. In this way, time for the user to search for the application interface may be reduced, and user operations may be more convenient, efficient, and rapid, thus providing more user-friendly experience.

In some embodiments, the method further includes the following steps: when the smart wearable device is in the first working mode, whether the application interface is within the field of view range corresponding to the smart wearable device is detected; if it is detected that the application interface is outside the field of view range, corresponding second duration information when the application interface is outside the field of view range is obtained; and when the second duration information is greater than second preset duration, first prompt information is displayed on the smart wearable device. The first prompt information is configured to instruct a user to turn the smart wearable device according to a preset direction, to cause the application interface to be within the field of view range corresponding to the smart wearable device.

For instance, when the smart wearable device is in the first working mode, that is, when the presentation area of the application interface corresponding to the smart wearable device is the fixed area, whether the application interface is within the field of view range corresponding to the smart wearable device is detected. If it is detected that the application interface is outside the field of view range corresponding to the smart wearable device, the corresponding second duration information when the application interface is outside the field of view range is obtained. When the second duration information is greater than the second preset duration, the first prompt information is displayed in the application interface corresponding to the smart wearable device. The first prompt information is configured to instruct the user to turn the smart wearable device according to the preset direction, to cause the application interface to be within the field of view range corresponding to the smart wearable device.

For instance, the first prompt information is displayed at an edge corresponding to the field of view range corresponding to the smart wearable device. The first prompt information is configured to indicate a direction in which the user needs to turn a head to view a user interface. Then, the user may turn according to the first prompt information, so to see the application interface.

For instance, when the smart wearable device turns in accordance with the first prompt information such that the application interface corresponding to the smart wearable device is within the field of view range, second prompt information is displayed on the smart wearable device. The second prompt information is configured to indicate that the application interface is within the field of view range corresponding to the smart wearable device, so as to remind the user of no need to further turn.

As at least one alternative embodiment, through setting of the first prompt information, the user can quickly turn according to a prompt content so as to obtain the corresponding application interface, thus reducing blind turning of the user and improving user efficiency of viewing the application interface. Through setting of the second prompt information, the user can know a current turning effect and further the user is reminded of stop of turning, thus improving user experience.

In some embodiments, the method further includes the following steps: when the application interface corresponding to the smart wearable device is in the first state, the application interface displays corresponding first interface elements; and when the application interface corresponding to the smart wearable device is in the second state, the application interface displays corresponding second interface elements. There are identical elements in the first interface elements and the second interface elements.

For instance, the first state is the partial interface content display state, and the second state is the full interface content display state. When the application interface corresponding to the smart wearable device is in the first state, the application interface hides elements that need to be hidden in the first state and merely displays first interface elements corresponding to the first state. When the application interface corresponding to the smart wearable device is in the second state, the application interface displays second interface elements corresponding to the second state. As the first state is the partial interface content display state, the number of elements corresponding to the first interface elements is less than the number of elements corresponding to the second interface elements. In addition, the second interface elements include all or some of the first interface elements. That is, there are identical elements in the first interface elements and the second interface elements.

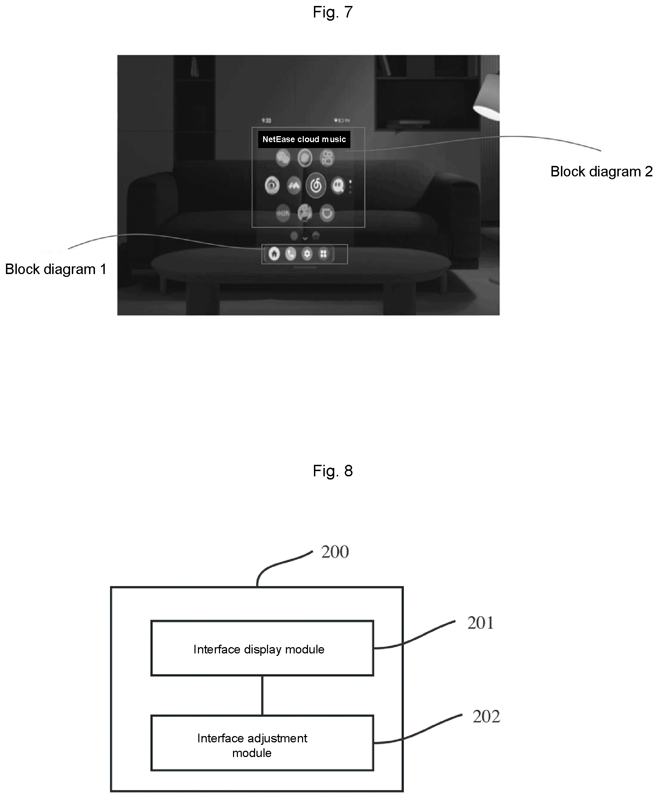

For instance, as shown in Fig. 7, the first interface elements are 4 application identifiers in a block diagram 1 in the figure, and the second interface elements include 4 application identifiers in the block diagram 1 and a plurality of application identifiers in a block diagram 2 in the figure. In this case, when the application interface corresponding to the smart wearable device is in the first state, merely the 4 application identifiers in the block diagram 1 are displayed on the application interface, as shown in Fig. 3. When the application interface corresponding to the smart wearable device is in the second state, the application interface displays not only 4 application identifiers in a block diagram 1 but also a plurality of application identifiers in a block diagram 2, as shown in Fig. 7.

As at least one alternative embodiment, the arrangement allows the user to quickly use the identical elements existing in the first interface elements and the second interface elements, thus saving searching time of the user and improving efficiency.

In addition, in the present disclosure, the sliding operation or the tap operation is performed on the smart wearable device or the controller communicatively connected to the smart wearable device, and further the corresponding interface adjustment instruction is obtained. For instance, the sliding operation may be sliding at a corresponding position of the smart wearable device. Compared with an accurate tap operation, this reduces difficulty for the user to operate the application interface of the smart operation device while removing, such that the user can properly operate the application interface corresponding to the smart wearable device while removing, or may perform tapping on the quick instruction area through the tap operation. A tappable range is larger than an icon range, such that the application interface can be accurately and quickly switched from the first state to the second state according to the interface adjustment instruction. Thus, problems in the related art that when a smart wearable device displays an application list interface, a user needs to accurately tap a corresponding icon, imposing strict precision requirements on user operations, and the user cannot use the application list interface properly while moving are solved. Flexibility and efficiency of application interface adjustment of the smart wearable device are improved, such that the user can conveniently use the smart wearable device, and user satisfaction is improved.

With reference to Fig. 8, Fig. 8 shows a method and apparatus 200 for displaying an application interface according to an example of the present disclosure. The method and apparatus 200 for displaying an application interface includes an interface display module 201 and an interface adjustment module 202. The interface display module 201 is configured to control, when the smart wearable device is in a worn state, the smart wearable device to display a preset application interface. The interface adjustment module 202 is configured to receive an interface adjustment instruction, and switch the application interface from a first state to a second state according to the interface adjustment instruction.

In some embodiments, the trigger operation includes a sliding operation. In a process of receiving the interface adjustment instruction, the interface adjustment module 202 performs the following steps:
the sliding operation received by the smart wearable device is detected, and a corresponding sliding trajectory is obtained according to the sliding operation; and
the interface adjustment instruction corresponding to the smart wearable device is determined according to the sliding trajectory; or,
the sliding operation received by a controller communicatively connected to the smart wearable device is detected, and a corresponding sliding trajectory is obtained according to the sliding operation; and
the interface adjustment instruction corresponding to the smart wearable device is determined according to the sliding trajectory.

In some embodiments, the smart wearable device and/or a controller communicatively connected to the smart wearable device is provided with quick instruction areas. Each of the quick instruction areas corresponds to one interface adjustment instruction. The trigger operation further includes a tap operation. In a process of receiving the interface adjustment instruction, the interface adjustment module 202 performs the following steps:
a tap position corresponding to the tap operation is detected;
the quick instruction area triggered by the tap operation is determined according to the tap position; and
the corresponding interface adjustment instruction is generated according to the quick instruction area triggered by the tap operation.

In some embodiments, the application interface includes a first display area and a second display area. The application interface includes at least one second display area.

In a process of switching the application interface from the first state to the second state according to the interface adjustment instruction, the interface adjustment module 202 performs the following steps:
the first display area is switched from the first state to the second state according to the interface adjustment instruction, and a display state corresponding to the second display area is at least controlled to remain unchanged.

In some embodiments, the apparatus 200 for displaying an application interface further performs the following step:
when the application interface of the smart wearable device is in a target state, if it is detected that an application identifier corresponding to the application interface is in a selected state, the application identifier is highlighted. A mode for the highlighting includes at least one of a size change of the application identifier and a color change of the application identifier.

In some embodiments, the application interface at least includes a first display area and a second display area. The apparatus 200 for displaying an application interface further performs the following steps:
a first area corresponding to the first display area and a second area corresponding to the second display area within a field of view range corresponding to the smart wearable device are at least obtained; and
at least the first area and the second area are compared to obtain a maximum area, and a display area corresponding to the maximum area is determined as a target interaction area. The target interaction area is an area in which the smart wearable device performs interface operations.

In some embodiments, the smart wearable device is configured with a first working mode and a second working mode. The first working mode is to cause a presentation area corresponding to the application interface to be a fixed area. The second working mode is to cause the presentation area corresponding to the application interface to change in accordance with turning of the smart wearable device. The apparatus 200 for displaying an application interface further performs the following steps:
when the smart wearable device is in the first working mode, whether the application interface is within a field of view range corresponding to the smart wearable device is detected;
if it is detected that the application interface is outside the field of view range, corresponding first duration information when the application interface is outside the field of view range is obtained; and
when the first duration information is greater than first preset duration, the first working mode corresponding to the smart wearable device is switched to the second working mode.

In some embodiments, the apparatus 200 for displaying an application interface further performs the following steps:
when the smart wearable device is in the first working mode, whether the application interface is within the field of view range corresponding to the smart wearable device is detected;
if it is detected that the application interface is outside the field of view range, corresponding second duration information when the application interface is outside the field of view range is obtained; and
when the second duration information is greater than second preset duration, first prompt information is displayed on the smart wearable device. The first prompt information is configured to instruct a user to turn the smart wearable device according to a preset direction, to cause the application interface to be within the field of view range corresponding to the smart wearable device.

In some embodiments, the apparatus 200 for displaying an application interface further performs the following steps:
when the application interface corresponding to the smart wearable device is in the first state, the application interface displays corresponding first interface elements; and
when the application interface corresponding to the smart wearable device is in the second state, the application interface displays corresponding second interface elements. There are identical elements in the first interface elements and the second interface elements.

It should be noted that those skilled in the art may clearly understand that, for convenience and conciseness of description, reference may be made to a corresponding process in the above example of the method and apparatus for displaying an application interface for a specific work process of the above apparatus for displaying an application interface, which will not be repeated herein.

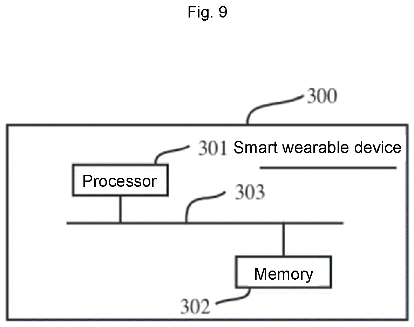

With reference to Fig. 9, Fig. 9 is a schematic structural block diagram of a smart wearable device according to an example of the present disclosure.

As shown in Fig. 9, a smart wearable device 300 includes a processor 301 and a memory 302. The processor 301 and the memory 302 are connected through a bus 303. For instance, the bus may be an inter-integrated circuit (I2C) bus.

As at least one alternative embodiment, the processor 301 is configured to provide calculation and control capabilities to support operation of the entire smart wearable device. The processor 301 may be a Central Processing Unit (CPU). Or, the processor 301 may be another general-purpose processor, a Digital Signal Processor (DSP), an Application Specific Integrated Circuit (ASIC), a Field-Programmable Gate Array (FPGA) or another programmable logic device, a discrete gate or a transistor logic device, a discrete hardware component, etc. The general-purpose processor may be a microprocessor, or the processor may be any conventional processor or another processor.

As at least one alternative embodiment, the memory 302 may be a flash chip, a read-only memory (ROM), a magnetic disk, an optical disk, a universal serial bus flash drive, or a mobile hard disk.

It may be understood by those skilled in the art that a structure shown in Fig. 9 is merely a block diagram of part of a structure related to a solution of the examples of the present disclosure, and does not constitute a limitation to the smart wearable device to which the solution of the examples of the present disclosure is applied. Specifically, a server may include more or fewer components than those shown in the figure, some components may be combined, or different component arrangements are provided.

The processor is configured to run a computer program stored in the memory, and implement the method for displaying an application interface according to any one of the examples of the present disclosure when executing the computer program.

In an example, the processor is configured to run the computer program stored in the memory, and implement, when executing the computer program, the following steps:
when the smart wearable device is in a worn state, the smart wearable device is controlled to display a preset application interface; and
an interface adjustment instruction is received, and the application interface is switched from a first state to a second state according to the interface adjustment instruction.

In some embodiments, the trigger operation includes a sliding operation. In a process of receiving the interface adjustment instruction, the processor 301 performs the following steps:
the sliding operation received by the smart wearable device is detected, and a corresponding sliding trajectory is obtained according to the sliding operation; and
the interface adjustment instruction corresponding to the smart wearable device is determined according to the sliding trajectory; or,
the sliding operation received by a controller communicatively connected to the smart wearable device is detected, and a corresponding sliding trajectory is obtained according to the sliding operation; and
the interface adjustment instruction corresponding to the smart wearable device is determined according to the sliding trajectory.

In some embodiments, the smart wearable device and/or a controller communicatively connected to the smart wearable device is provided with quick instruction areas. Each of the quick instruction areas corresponds to one interface adjustment instruction. The trigger operation further includes a tap operation. In a process of receiving the interface adjustment instruction, the processor 301 performs the following steps:
a tap position corresponding to the tap operation is detected;
the quick instruction area triggered by the tap operation is determined according to the tap position; and
the corresponding interface adjustment instruction is generated according to the quick instruction area triggered by the tap operation.

In some embodiments, the application interface includes a first display area and a second display area. The application interface includes at least one second display area.

In a process of switching the application interface from the first state to the second state according to the interface adjustment instruction, the processor 301 performs the following steps:
the first display area is switched from the first state to the second state according to the interface adjustment instruction, and a display state corresponding to the second display area is at least controlled to remain unchanged.

In some embodiments, the processor 301 further performs the following step:
when the application interface of the smart wearable device is in a target state, if it is detected that an application identifier corresponding to the application interface is in a selected state, the application identifier is highlighted. A mode for the highlighting includes at least one of a size change of the application identifier and a color change of the application identifier.

In some embodiments, the application interface at least includes a first display area and a second display area. The processor 301 further performs the following steps:
a first area corresponding to the first display area and a second area corresponding to the second display area within a field of view range corresponding to the smart wearable device are at least obtained; and
at least the first area and the second area are compared to obtain a maximum area, and a display area corresponding to the maximum area is determined as a target interaction area. The target interaction area is an area in which the smart wearable device performs interface operations.

In some embodiments, the smart wearable device is configured with a first working mode and a second working mode. The first working mode is to cause a presentation area corresponding to the application interface to be a fixed area. The second working mode is to cause the presentation area corresponding to the application interface to change in accordance with turning of the smart wearable device. The processor 301 further performs the following steps:
when the smart wearable device is in the first working mode, whether the application interface is within a field of view range corresponding to the smart wearable device is detected;
if it is detected that the application interface is outside the field of view range, corresponding first duration information when the application interface is outside the field of view range is obtained; and
when the first duration information is greater than first preset duration, the first working mode corresponding to the smart wearable device is switched to the second working mode.

In some embodiments, the processor 301 further performs the following steps:
when the smart wearable device is in the first working mode, whether the application interface is within the field of view range corresponding to the smart wearable device is detected;
if it is detected that the application interface is outside the field of view range, corresponding second duration information when the application interface is outside the field of view range is obtained; and
when the second duration information is greater than second preset duration, first prompt information is displayed on the smart wearable device. The first prompt information is configured to instruct a user to turn the smart wearable device according to a preset direction, to cause the application interface to be within the field of view range corresponding to the smart wearable device.

In some embodiments, the processor 301 further performs the following steps:
when the application interface corresponding to the smart wearable device is in the first state, the application interface displays corresponding first interface elements; and
when the application interface corresponding to the smart wearable device is in the second state, the application interface displays corresponding second interface elements. There are identical elements in the first interface elements and the second interface elements.

It should be noted that those skilled in the art may clearly understand that, for convenience and conciseness of description, reference may be made to a corresponding process in the above example of the method for displaying an application interface for a specific work process of the above smart wearable device, which will not be repeated herein.

An example of the present disclosure further provides a storage medium configured to perform computer-readable storage. The storage medium stores one or more programs. The one or more programs are executable by one or more processors, to implement steps of the method for displaying an application interface according to any one of the examples in the description of the present disclosure.

The storage medium may be an internal storage unit of the smart wearable device described in the above examples, such as a hard disk or an internal memory of the smart wearable device. Or, the storage medium may be an external storage device of the smart wearable device, such as a plug-in hard disk arranged on the smart wearable device, a Smart Media Card (SMC), a Secure Digital (SD) card, and a flash card.

It may be understood by those of ordinary skill in the art that all or some steps in the disclosed method and functional modules/units in a system and the apparatus may be implemented as software, firmware, hardware and appropriate combinations thereof. In an example of hardware, division between the functional modules/units mentioned in the above description does not necessarily correspond to division of physical components. For instance, one physical component may have a plurality of functions, or one function or step may be cooperatively performed by a plurality of physical components. Some or all physical components may be implemented as software executed by a processor, and for instance, a central processing unit, a digital signal processor, or a microprocessor, implemented as hardware, or implemented as an integrated circuit, and for instance, an application-specific integrated circuit. Such software may be distributed on a computer-readable medium. The computer-readable medium may include a computer storage medium (or a non-transitory medium) and a communication medium (or a transitory medium). As well known to those of ordinary skill in the art, the term "computer storage medium" includes volatile, nonvolatile, removable and non-removable media implemented in any method or technology configured to store information (such as a computer-readable instruction, a data structure, a program module, or other data). The computer storage medium includes, but is not limited to, a random access memory (RAM), an ROM, an electrically erasable programmable read-only memory (EEPROM), a flash memory, or other memory technologies, a compact disc read-only memory (CD-ROM), a digital versatile disc (DVD) or other optical disk storages, a magnetic cassette, a magnetic tape, a magnetic disk storage or other magnetic storage apparatuses, or any other medium that may be configured to store desired information and may be accessed by a computer. Further, it is well known to those of ordinary skill in the art that a communication medium generally includes the computer-readable instruction, the data structure, the program module, or other data in, for instance, a carrier wave or a modulated data signal of other transmission mechanisms, and may include any information delivery medium.

It should be understood that the term "and/or" used in the description and the appended claims of the present disclosure refers to any combination and all possible combinations of one or more of the associated listed items, which includes the combinations. It should be noted that terms "include", "comprise", "involve", or their any other variations herein are intended to cover non-exclusive inclusions, such that a process, a method, an article, or a system including a series of elements not only includes those elements, but also includes other elements that are not explicitly listed, or includes inherent elements of the process, the method, the article, or the system. Without more limitations, the elements defined by the sentence "include a ..." or "comprise a ..." do not exclude existence of other identical elements in the process, the method, the article, or the system including the elements.

Sequence numbers of the examples of the present disclosure are for description and do not indicate advantages and disadvantages of the examples. What are described above is merely specific examples of the present disclosure, and is not intended to limit the protection scope of the present disclosure. Those skilled in the art may easily conceive any equivalent modifications or substitutions within the technical scope disclosed in the present disclosure. The modifications or substitutions should fall within the protection scope of the present disclosure. Thus, the protection scope of the present disclosure shall be subject to the protection scope of the claims.

## Claims

1. A method for displaying an application interface, applied to a smart wearable device, comprising:
controlling, when the smart wearable device is in a worn state, the smart wearable device to display a preset application interface; and
receiving an interface adjustment instruction, and switching the application interface from a first state to a second state according to the interface adjustment instruction.

2. The method as claimed in claim 1, wherein a trigger operation comprises a sliding operation, and the receiving an interface adjustment instruction comprises:
detecting the sliding operation received by the smart wearable device, and obtaining a corresponding sliding trajectory according to the sliding operation; and
determining the interface adjustment instruction corresponding to the smart wearable device according to the sliding trajectory; or
detecting the sliding operation received by a controller communicatively connected to the smart wearable device, and obtaining a corresponding sliding trajectory according to the sliding operation; and
determining the interface adjustment instruction corresponding to the smart wearable device according to the sliding trajectory.

3. The method as claimed in claim 2, wherein the determining the interface adjustment instruction corresponding to the smart wearable device according to the sliding trajectory comprises:
calculating a curve slope of the sliding trajectory to obtain a slope calculation result, and determining a sliding direction corresponding to the sliding operation according to the slope calculation result; and
determining a target display state of the application interface corresponding to the smart wearable device according to the sliding direction, and determining the interface adjustment instruction corresponding to the smart wearable device according to the target display state.

4. The method as claimed in claim 3, wherein the determining the interface adjustment instruction corresponding to the smart wearable device according to the target display state comprises:
obtaining a current display state of the application interface corresponding to the smart wearable device; and
determining the interface adjustment instruction corresponding to the smart wearable device according to the current display state and the target display state.

5. The method as claimed in claim 2, wherein the obtaining a corresponding sliding trajectory according to the sliding operation comprises:
obtaining a sliding curve corresponding to the sliding operation, performing data fitting on the sliding curve, and obtaining the sliding trajectory corresponding to the sliding operation.

6. The method as claimed in claim 1, wherein the smart wearable device and/or a controller communicatively connected to the smart wearable device is provided with quick instruction areas, each of the quick instruction areas corresponds to one interface adjustment instruction, a trigger operation further comprises a tap operation, and the receiving an interface adjustment instruction comprises:
detecting a tap position corresponding to the tap operation;
determining a quick instruction area triggered by the tap operation according to the tap position; and
generating the corresponding interface adjustment instruction according to the quick instruction area triggered by the tap operation.

7. The method as claimed in claim 1, wherein the application interface comprises a first display area and a second display area, and the application interface comprises at least one second display area; and
the switching the application interface from a first state to a second state according to the interface adjustment instruction comprises:
switching the first display area from the first state to the second state according to the interface adjustment instruction, and at least controlling a display state corresponding to the second display area to remain unchanged.

8. The method as claimed in claim 7, wherein the application interface comprises two second display areas, and the two second display areas are configured at a common side or different sides of the first display area.

9. The method as claimed in claim 7, wherein the second display area is configured to persistently display user-defined common components or user-defined content of interest.

10. The method as claimed in claim 9, wherein the application interface comprises two second display areas, one of the two second display areas is configured to persistently display the user-defined common components, and the other of the two second display areas is configured to persistently display the user-defined content of interest.

11. The method as claimed in any one of claims 1 to 10, further comprising:
highlighting, when the application interface of the smart wearable device is in a target state and it is detected that an application identifier corresponding to the application interface is in a selected state, the application identifier, wherein a mode for the highlighting comprises at least one of a size change of the application identifier and a color change of the application identifier.

12. The method as claimed in any one of claims 1 to 10, wherein the application interface at least comprises a first display area and a second display area; and the method further comprises:
at least obtaining a first area corresponding to the first display area within a field of view range corresponding to the smart wearable device and a second area corresponding to the second display area within the field of view range corresponding to the smart wearable device; and
at least comparing the first area and the second area to obtain a maximum area, and determining a display area corresponding to the maximum area as a target interaction area, wherein the target interaction area is an area in which the smart wearable device performs interface operations.

13. The method as claimed in any one of claims 1 to 10, wherein the smart wearable device is configured with a first working mode and a second working mode, the first working mode is to cause a presentation area corresponding to the application interface to be a fixed area, and the second working mode is to cause the presentation area corresponding to the application interface to change in accordance with turning of the smart wearable device; and the method further comprises:
detecting, when the smart wearable device is in the first working mode, whether the application interface is within a field of view range corresponding to the smart wearable device;
obtaining, when it is detected that the application interface is outside the field of view range, corresponding first duration information when the application interface is outside the field of view range; and
switching, when the first duration information is greater than a first preset duration, the first working mode corresponding to the smart wearable device to the second working mode.

14. The method as claimed in claim 13, further comprising:
detecting, when the smart wearable device is in the first working mode, whether the application interface is within the field of view range corresponding to the smart wearable device;
obtaining, when it is detected that the application interface is outside the field of view range, corresponding second duration information when the application interface is outside the field of view range; and
displaying, when the second duration information is greater than a second preset duration, first prompt information on the smart wearable device, wherein the first prompt information is configured to instruct a user to turn the smart wearable device according to a preset direction, to cause the application interface to be within the field of view range corresponding to the smart wearable device.

15. The method as claimed in claim 1, further comprising:
causing, when the application interface corresponding to the smart wearable device is in the first state, the application interface to display corresponding first interface elements; and
causing, when the application interface corresponding to the smart wearable device is in the second state, the application interface to display corresponding second interface elements, wherein there are identical elements in the first interface elements and the second interface elements.

16. The method as claimed in claim 15, wherein the first interface elements and/or the second interface elements comprise application icons, received information, and opened pages.

17. The method as claimed in claim 1, wherein display states corresponding to the application interface comprise a partial interface content display state and a full interface content display state, one of the first state and the second state is any one of the partial interface content display state and the full interface content display state, and the first state is different from the second state.

18. An apparatus for displaying an application interface, comprising:
an interface display module, configured to control, when a smart wearable device is in a worn state, the smart wearable device to display a preset application interface; and
an interface adjustment module, configured to receive an interface adjustment instruction, and switch the application interface from a first state to a second state according to the interface adjustment instruction.

19. A smart wearable device, comprising a processor and a memory, wherein
the memory is configured to store a computer program; and
the processor is configured to execute the computer program and implement the method for displaying an application interface as claimed in any one of claims 1 to 17 when executing the computer program.

20. A computer-readable storage medium, storing a computer program, wherein when the computer program is executed by a processor, the processor is caused to implement the method for displaying an application interface as claimed in any one of claims 1 to 17.
